# EUROPEAN PATENT SPECIFICATION

(11) **EP 4 262 060 B1**
(45) Date of publication and mention of the grant of the patent: **20.05.2026**
(21) Application number: 21903677.9
(22) Date of filing: 22.11.2021
(51) Int. Cl.: F16B 2/06, F16B 5/06, H02K 15/14, F16B 2/08

(54) **ROTOR SUPPORT DEVICE FOR SHAFT GENERATOR**
ROTORTRÄGERVORRICHTUNG FÜR EINEN WELLENGENERATOR
DISPOSITIF DE SUPPORT DE ROTOR POUR GÉNÉRATEUR D'ARBRE

(30) Priority: 08.12.2020 KR 20200170620
(43) Date of publication of application: 18.10.2023
(73) Proprietor: Hyosung Heavy Industries Corporation, Seoul 04144 (KR)
(72) Inventor: SHIN, Moon Hwan, Yeongwol-gun, Gangwon-do 26217 (KR); KIM, Ju Seob, Changwon-si, Gyeongsangnam-do 51478 (KR); YEO, Sung Mo, Changwon-si, Gyeongsangnam-do 51526 (KR); JEONG, Won Bong, Changwon-si, Gyeongsangnam-do 51426 (KR)
(74) Representative: Viering, Jentschura & Partner mbB Patent- und Rechtsanwälte
(86) International application number: PCT/KR2021/017135
(87) International publication number: WO 2022/124631

(56) References cited:
- KR-A- 20170 027 473
- KR-A- 20190 002 518
- KR-B1- 101 437 172
- US-A- 5 326 222
- US-A1- 2003 033 816

## Description

### Technical Field

The present disclosure relates to a rotor support device for a shaft generator.

### Background Art

Shaft generators used in ships and the like do not have their own bearings to support a rotor. Therefore, in order to transport a shaft generator to an installation site after manufacturing it, a device for temporarily supporting and fixing the rotor is required.

Conventionally, in the process of transporting a rotor, it is necessary to simply support and transport the rotor with respect to a stator, and in the process of installing the rotor, an air gap between the rotor and the stator is separately adjusted. Therefore, the installation of the shaft generator is very complicated and takes a lot of time.

In addition, it is necessary to prevent relative movement between the rotor and the stator in consideration of the inertial force caused by the change of the vehicle's driving speed during the transportation, which is not satisfied in the prior arts.

In addition, it is necessary to be able to withstand an impact force caused by poor road flatness during transportation, but the prior arts do not provide a structure to withstand the impact force, thereby causing damage to the rotor and stator due to movement caused by the impact.

Such prior arts include US Patent Registration US 9876415 and Japanese Patent Application Publication No. 2010-156333.

KR 10-2017-0027473 A discloses a device for inserting and withdrawing a rotor of a generator, which includes a body disposed inside a stator of the generator, a shaft which is extended along an axial direction, and a bearing which is provided at one point of the shaft to support the shaft to rotate. The device is provided for withdrawing the rotor of the generator from the inside of the stator of the generator to maintain or repair the rotor of the generator. The device for inserting and withdrawing a rotor of a generator includes: a transfer unit which moves along a rail; a first block which includes a first support unit and a first receiving unit; and a second block which includes a second support unit and a second receiving unit. The body supports the first block. The second block supports at least one of the shaft and the bearing.

KR 10-1437172 A discloses an apparatus for supporting a rotor of a turbine engine disposed on a support surface. The apparatus includes a housing and a rotor support bearing disposed within the housing and support legs operatively communicating with the housing and structurally connected directly to the support surface.

### Disclosure

### Technical Problem

An object of the present disclosure is to provide a device capable of accurately fixing a rotor of a shaft generator to a stator.

An object of the present disclosure is to make the device capable of fixing the rotor of the shaft generator to the stator to be reusable.

An object of the present disclosure is to securely fix the rotor of the shaft generator for all directions in space.

### Technical Solution

In the present disclosure for achieving the objects as described above, a rotor support device for a shaft generator that supports a rotor shaft protruding outward from both ends of a housing of the shaft generator according to claim 1 is disclosed. A rotor support device for a shaft generator may include: a support block positioned on a support piece provided in the housing and formed by machining a support surface on which the rotor shaft is supported; and a binder that is in close contact with an outer surface of the rotor shaft on the side opposite to the surface supported by the support block and both ends of the binder are fastened to support piece.

The support piece may be provided with an inclined part on which the support block is seated to surround a shaft through hole through which the rotor shaft penetrates.

The inclined part has a 'V' shape, and a curved piece having a radius of curvature corresponding to a radius of curvature of the rotor shaft may be provided on an upper surface of the inclined part, and the curved piece and the surface of the inclined part adjacent to the curved piece may have a machine-designed dimensions.

A reinforcing bar may be further provided on the surface of the housing so as to be orthogonally connected to the lower surface of the inclined part.

The support block may have a seating surface having a radius of curvature corresponding to the radius of curvature of the curved piece to be seated on the curved piece, and a support surface machined to have a radius of curvature corresponding to a radius of curvature of the rotor shaft so that the rotor shaft is seated on the opposite side of the seating surface.

The support block may be made of MC nylon material.

The binder includes: a strap surrounding a surface opposite to the surface of the rotor shaft supported by the support block with a predetermined tension; fastening pieces provided on both sides of the strap and installed to face the inclined part; and a bolt penetrating the fastening piece to be fastened to the inclined part and a fastening nut.

In order to reinforce the fastening force between the fastening pieces and the strap, reinforcing pieces may be provided at both ends of the fastening pieces in the width direction.

A support bar for fastening between a bar fastener provided on the housing surface and a flange provided on the rotor shaft may be further provided in the longitudinal direction.

The longitudinal support bar may include a bar body, a first screw part provided at one end of the bar body and fastened to the flange by forming a screw portion on an outer surface thereof, and a second screw part provided at the other end of the bar body and fastened to the bar fastener by forming a screw portion on an outer surface thereof.

At least two or more locking nuts may be installed in the first screw part at positions corresponding to both surfaces of the flange, and at least two or more locking nuts may be installed in the second screw part adjacent to the bar fastener.

### Advantageous Effects

A rotor support device for shaft generator according to the present disclosure may have at least one or more of the following effects.

In the present disclosure, in order to accurately support a rotor with respect to a housing of a shaft generator, a support block with a support surface machined on a support piece fixed to the housing may be used. The support block allows the outer surface of a rotor shaft to be accurately seated by machining the support surface on which the rotor shaft is seated. Therefore, the rotor may be transported and installed in a supported state while maintaining an accurate air gap with respect to the stator.

In the present disclosure, the support block, a binder, and a longitudinal support bar for supporting and fixing the rotor shaft with respect to the housing of the shaft generator may all be removed and recovered by an operator, such that they may be able to reused for the transfer work of the shaft generator, maintenance work, or the transfer and installation work of other shaft generators.

In the present disclosure, the support block supports the rotor shaft in the direction of gravity, the binder prevents the rotor shaft from moving in the opposite direction of gravity, the support block and the binder cooperate to prevent the movement of the rotor shaft in the horizontal direction, and the longitudinal support bar prevents the rotor shaft from moving in the longitudinal direction. Accordingly, the rotor of the shaft generator may be transported while maintaining an accurate relative position without moving with respect to the housing and the stator.

### Description of Drawings

FIG. 1 is a perspective view illustrating a preferred embodiment of a rotor support device for a shaft generator according to the present disclosure.

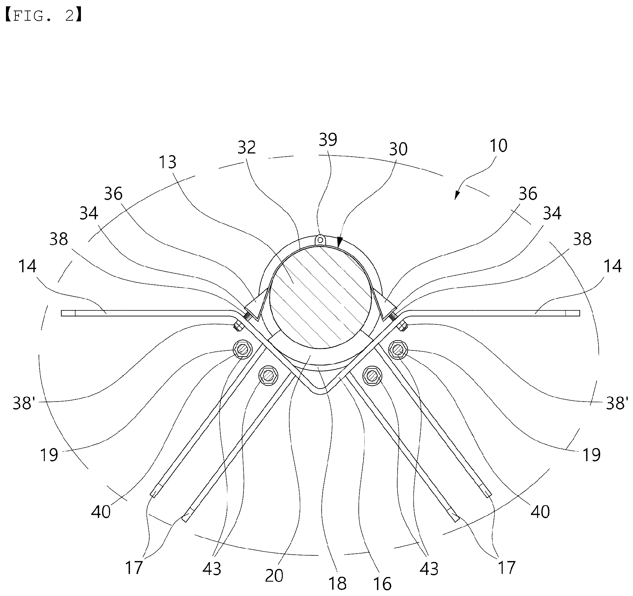

FIG. 2 is a cross-sectional view illustrating the configuration of the embodiment of the present disclosure.
FIG. 3 is a perspective view illustrating an outer surface of one side of a housing to which the embodiment of the present disclosure is applied.
FIG. 4 is a perspective view of a support block constituting the embodiment of the present disclosure.

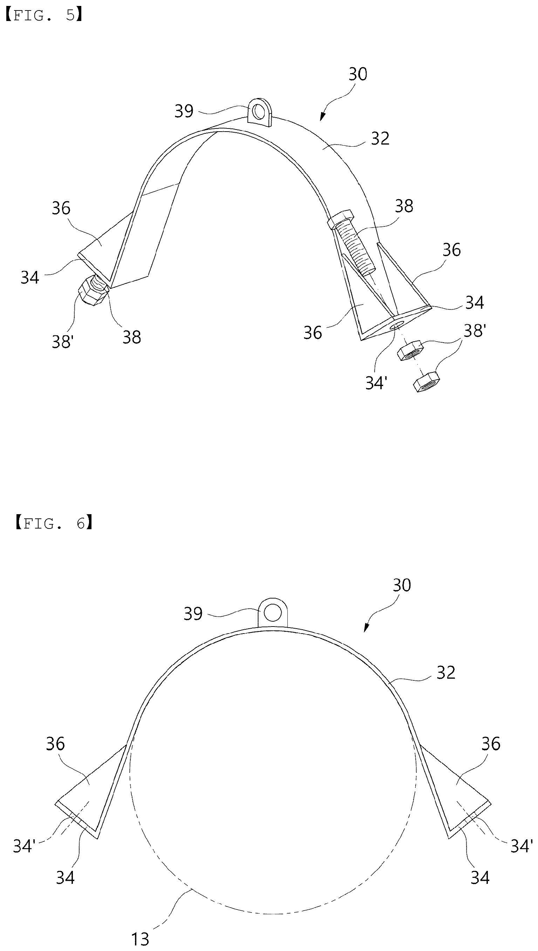

FIG. 5 is a perspective view showing the configuration of a binder constituting the embodiment of the present disclosure.
FIG. 6 is a front view showing the configuration of the binder constituting the embodiment of the present disclosure.

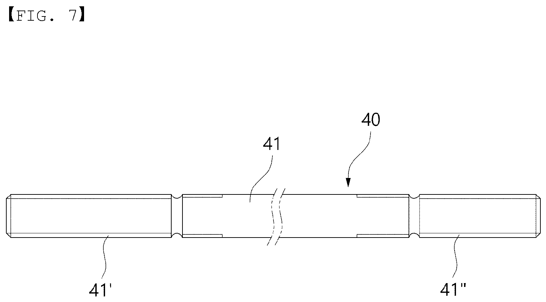

FIG. 7 is a front view showing the configuration of a longitudinal support bar constituting the embodiment of the present disclosure.

### Mode for Disclosure

Hereinafter, some embodiments of the present disclosure will be described in detail with reference to exemplary drawings. In assigning reference numerals to the components of each drawing, it should be noted that the same components are given the same reference numerals as much as possible even though the same components are indicated on different drawings. In addition, in describing the embodiment of the present disclosure, if it is determined that a detailed description of a related known configuration or function interferes with the understanding of the embodiment of the present disclosure, the detailed description thereof will be omitted.

In addition, in describing the components of the embodiment of the present disclosure, terms such as first, second, A, B, (a), (b), etc. may be used. These terms are only used to distinguish between the components, and the nature, or order of the components are not limited by the terms. When a component is described as being "combined with", "coupled to" or "connected to" another component, the component may be directly connected to or combined with each other, but it should be understood that another component may be "connected to", "coupled to" or " combined with" each of the components therebetween.

Hereinafter, a configuration of a rotor support device for shaft generator according to an embodiment of the present disclosure will be described with reference to the accompanying drawings.

A housing 10 may form an exterior of a shaft generator. The housing 10 may be composed of a plurality of parts. Shaft through holes 12 may be formed on both surfaces of the housing 10.

A rotor shaft 13 integrally rotating with a rotor may pass through the shaft through holes 12 and extend to the outside of the housing. The rotor shaft 13 may extend to the outside of both surfaces of the housing 10 through the shaft through holes 12. At the end of the rotor shaft 13, flanges 13' for connection with a rotation shaft (not shown) to which the shaft generator is connected may be provided, respectively.

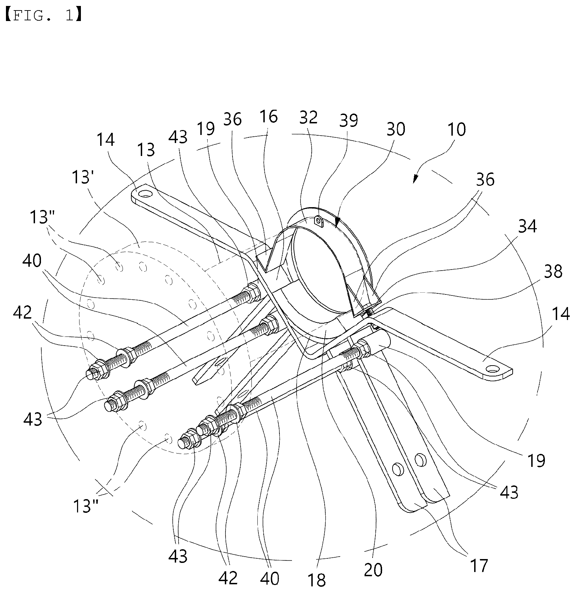

A fastening hole 13" for fastening with the flange (not shown) on the rotation shaft may be formed in the flange 13'. The fastening hole 13" may also be used for fastening a longitudinal support bar 40 to be described below. A plurality of the fastening holes 13" may be formed. As shown in FIG. 1, the plurality of fastening holes 13" may be formed to form a circular trajectory around the edge of the flanges 13'.

Support pieces 14 may be installed on both side surfaces of the housing 10 on which the shaft through holes 12 are formed. The support pieces 14 may be fixed to the housing 10 in various forms. For example, the support piece 14 may be fixed to the housing 10 with bolts or may be fixed by welding. The support pieces 14 may protrude by a predetermined width orthogonal to the surface of the housing 10.

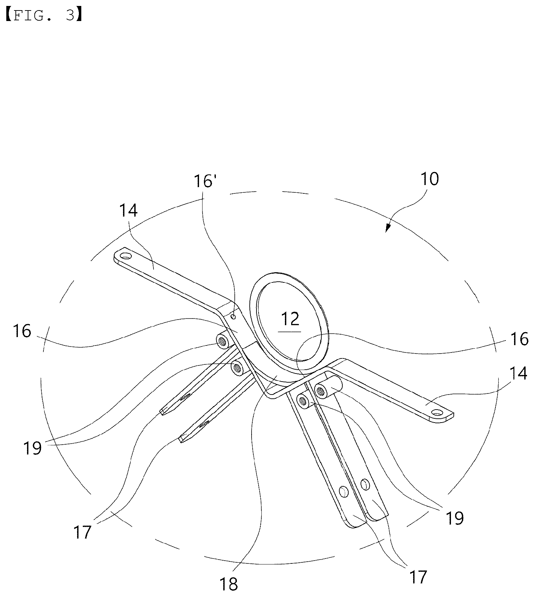

As shown in FIG. 3, in the position corresponding to the lower portion of the shaft through hole 12 in the support piece 14, an inclined part 16 may be formed around a portion of the shaft through hole 12. The inclined part 16 may have a 'V' shape. The inclined part 16 is a portion of the support piece 14. Fastening holes 16' may be formed in the inclined part 16. The fastening holes 16' may be formed to penetrate both ends of the inclined part 16, respectively. A fastening piece 34 of a binder 30 to be described below may be fastened to the fastening hole 16' of the inclined part 16.

A reinforcing bar 17 may be further installed on the outer surface of the inclined part 16. The reinforcing bar 17 may support the outer surface of the inclined part 16 while being fixed to the surface of the housing 10. The reinforcing bar 17 may be orthogonal to the inclined part 16. Accordingly, the reinforcing bar 17 may extend obliquely when one surface of the housing 10 is viewed from the front. The reinforcing bars 17 may be provided on both sides of the inclined part 16, respectively. At least two or more of the reinforcing bars 17 may support one side of the inclined part 16. In the illustrated embodiment, one side of the inclined part 16 is supported by two reinforcing bars 17.

A curved piece 18 may be provided to connect the inner surfaces of both sides of the inclined part 16. The curved piece 18 may have a predetermined radius of curvature around the center of the shaft through hole 12. The radius of curvature of the upper surface of the curved piece 18 may be accurately set through machining. A support block 20 to be described below may be seated on the curved piece 18. The support block 20 may be seated only on the upper surface of the curved piece 18. The radius of curvature of the upper surface of the curved piece 18 may have a predetermined value with respect to the center of the rotor shaft 13 while the air gap is maintained.

In the illustrated embodiment, the support block 20 may be mounted on a portion of the upper surface of the inclined part 16, in addition to the curved piece 18. To this end, in addition to the upper surface of the curved piece 18, the upper surface of the inclined part 16 adjacent to both ends of the curved piece 18 may also be machined. The machining of the curved piece 18 and the inclined part 18 may be performed after the curved piece 18 is fixed to the inclined part 16.

A plurality of bar fasteners 19 may be installed around the lower portion of the inclined part 16. The bar fastener 19 may have a hole formed therein, and a screw portion may be formed on an inner surface of the hole. One end of the longitudinal support bar 40 to be described below may be fastened to the bar fastener 19. The bar fastener 19 may be installed adjacent to the inclined part 16 and the reinforcing bar 17. The appearance of the bar fastener 19 may be formed in a round pillar shape in the present embodiment.

The support block 20 may be seated on the support piece 14. More precisely, the support block 20 may be seated on the inclined part 16 of the support piece 14. The support block 20 may be seated on the curved piece 18 on the inclined part 16 of the support piece 14.

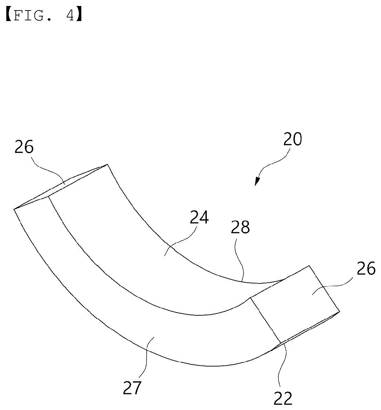

The support block 20 may be made of a synthetic resin material. An example of a material forming the support block 20 may be MC nylon. The support block 20 may be formed in an approximately inverted arch shape as shown in FIG. 4. The support block 20 may have a rectangular cross section. A seating surface 22 may be formed at a lower end of the support block 20 as a curved surface having a predetermined radius of curvature. The seating surface 22 may be seated on the inclined part 16 and the curved piece 18.

A support surface 24 may be formed on an upper end of the support block 20 opposite to the seating surface 22. The support surface 24 may also be formed as a curved surface having a predetermined radius of curvature. The radius of curvature of the support surface 24 may coincide with the radius of curvature of the outer surface of the rotor shaft 13 while an air gap is maintained. The rotor shaft 13 may be mounted on the support surface 24.

Both ends of the support block 20 may have end surfaces 26. The end surface 26 may be a flat surface. The front end of the support block 20 may have a front surface 27 and the rear end may have a rear surface 28. The front surface 27 and the rear surface 28 may be flat, respectively.

In the support block 20, the support surface 24 and the seating surface 22 may be dimensionally managed through machining. The support surface 24 may be dimensionally managed through machining to be equal to the radius of curvature of the outer surface of the rotor shaft 13. The seating surface 22 may be dimensionally managed through machining so that the surface thereof is equal to the radius of curvature of the curved piece 18 of the inclined part 16. In this way, the surface dimensions of the seating surface 22 and the support surface 24 of the support block 20 are managed through machining, so that the air gap between a stator and the rotor may be accurately set when the rotor shaft 13 is located on the support block 20 seated on the inclined part 16.

The size of the support block 20 may be set to be seated on the inclined part 16 of the support piece 14 to support the rotor shaft 13. The extent to which the support surface 24 of the support block 20 surrounds the rotor shaft 13 may be less than half the arc of the rotor shaft 13

A binder 30 may be fixed to the support piece 14 so as to surround the remaining circular arc portion of the rotor shaft 13 seated on the support block 20. The binder 30 may surround the rotor shaft 13 and be fixed to the housing 10. The binder 30 has a strap 32. The strap 32 substantially surrounds the rotor shaft 13. The strap 32 has a predetermined width and thickness, for example, the thickness may be determined to have a certain degree of flexible characteristics. The strap 32 may be made of a metal material. The material of the strap 32 may be mild steel.

Fastening pieces 34 may be provided at both ends of the strap 32. The fastening pieces 34 may be plates having a predetermined shape. The fastening pieces 34 may be positioned adjacent to the inclined part 16. That is, the fastening pieces 34 are not in close contact with the inclined part 16, such that the tension may be maintained and the strap 32 becomes tight by using bolts 38 and fastening nuts 38', which will be described below. Through holes 34' may be formed in the fastening pieces 34. The through hole 34' may have a size and shape corresponding to that of the fastening hole 16'. Reinforcing pieces 36 may be provided at both ends of the fastening pieces 34 and both ends of the strap 32 in the width direction. The fastening pieces 34 may be more firmly fixed to the strap 32 by the reinforcing pieces 36.

A bolt 38 may be provided so as to simultaneously penetrate and be fastened to the through hole 34' of the fastening piece 34 and the fastening hole 16' of the inclined part 16. A fastening nut 38' fastened to the bolt 38 to be in close contact with the outer surface of the inclined part 16 may be provided. Due to the bolt 38 and the fastening nut 38', the fastening piece 34 of the binder 30 may be positioned adjacent to the inclined part 16 of the supporting piece 14. A configuration for fastening with the inclined part 16 including the fastening piece 34 may be provided at both ends of the strap 32, respectively. The reference numeral 39 in the accompanying drawings is a lifting ring, which may be used to lift the binder 30.

Next, a configuration for preventing movement of the rotor shaft 13 in the longitudinal direction will be described. A longitudinal support bar 40 may have a first screw part 41' and a second screw part 41" at both ends of the bar body 41. The first screw part 41' may be fastened to the flange 13', and the second screw part 41 " may be fastened to the bar fastener 19. A length of the first screw part 41' section may be longer than a length of the second screw part 41" section. Locking nuts 43 may be respectively fastened to the first screw part 41' at positions corresponding to both sides of the flange 13'. The locking nut 43 may be fastened to the second screw part 41" at a position corresponding to one side of the bar fastener 19. Accordingly, the length of the first screw part 41' section may be longer than that of the second screw part 41". The locking nuts 43 may be used in pairs. The reference numeral 42 denotes a washer.

The bar body 41 of the longitudinal support bar 40 may be a round pillar having a predetermined length. Of course, the bar body 41 may not necessarily be a round pillar shape. The bar body 41 may be a polygonal pillar, such as a square pillar. The screw parts 41' and 41" have a round pillar shape. In case the bar body 41 is not in the shape of a round pillar, it must have an outer diameter that may pass through the fastening hole 13" of the flange 13'.

Hereinafter, the use of the rotor support device for the shaft generator according to the present disclosure having the configuration as described above will be described in detail.

In general, a rotor of the shaft generator does not have a dedicated bearing. For example, until the rotor shaft 13 of the shaft generator is fastened to the rotation shaft connecting between an engine and a propeller of a ship, a configuration that serves to fix the rotor to the housing 10 of the shaft generator is required. This configuration may be performed by the rotor support device for the shaft generator of the present disclosure.

To this end, the support block 20 may be seated on the support piece 14 fixed to the housing 10 to support the rotor shaft 13 in the direction of gravity, and the binder 30 may be used to prevent the rotor shaft 13 from moving in a direction other than the direction of gravity, such as a direction opposite to or orthogonal to the direction of gravity.

The binder 30 may be fastened to the support piece 14 while the rotor shaft 13 is seated on the support block 20. In the state where the strap 32 is seated on the outer surface of the rotor shaft 13, the bolts 38 penetrating the through holes 34' of the fastening piece 34 at both ends thereof penetrate the fastening hole 16' of the inclined part 16 and are fastened with the fastening nuts 38'. By adjusting a fastening degree between the fastening nuts 38' and the bolt 38, the strap 32 may be in close contact with the outer surface of the rotor shaft 13, and both ends of the strap 32 may be fixed to the inclined part 16 of the support piece 14. At this time, the strap 32 may be in close contact with the surface of the rotor shaft 13 at a position facing the support surface 24 of the support block 20 to prevent the movement of the rotor shaft 13. The tension of the strap 32 may be adjusted according to the degree to which the fastening nuts 38' are tightened to the bolt 38.

Next, the longitudinal support bar 40 is inserted through the fastening hole 13" of the flange 13'. Two locking nuts 43 are assembled to the second screw part 41", and the second screw part 41" is fastened to the bar fastener 19. In a state where the second screw part 41" is fastened to the bar fastener 19, two locking nuts 43 are tightened to prevent loosening of the second screw part 41".

The locking nut 43 may also be placed on the first screw part 41' so that washers 42 interposed between the locking nut 43 and the flange 13' are in close contact with both sides of the flange 13'. Before fastening the locking nut 43 to the second screw part 41" , the locking nut 43 and the washer 42 are positioned on the first screw part 41' of the inner surface of the flange 13' .

In addition, the washer 42 and the locking nut 43 are fastened to the first screw part 41' of the longitudinal support bar 40 on the outer surface of the flange 13' so that the longitudinal support bar 40 may be firmly fixed between the flange 13' and the housing 10. A plurality of the longitudinal support bars 40 may be used with respect to a surface of one side of the housing 10. In the present embodiment, four longitudinal support bars 40 are used on a surface of one side of the housing 10.

As shown in FIG. 1, the rotor shaft 13 is supported by the housing 10 and transported in a fixed state, and the flange 13' may be fastened to a rotation shaft at an installation site, respectively. Adjacent to the flange of the rotation shaft is a bearing rotatably supporting the rotation shaft, so that when the rotor shaft 13 of the shaft generator is connected to the rotation shaft, an air gap may be maintained between the stator and the rotor of the shaft generator. For reference, the rotor shaft 13 has a dimension such that no sagging occurs between the rotation shafts.

Immediately before the rotation shaft and the rotor shaft 13 are fastened, the longitudinal support bars 40 are required to be separated in an environment where no longitudinal force is applied, and after the rotation shaft and the rotor shaft 13 are fastened, support block 20 and the binder 30 may be separated. The support block 20 may be separated in a state in which the rotor shaft 13 is slightly lifted. Since the left and right width of the support block 20 is not greater than the diameter of the rotor shaft 13, an operator may easily separate it. When the binder 30 is removed, the rotor shaft 13 is in a state in which the stator and the rotor are rotatably connected to the rotation shaft while maintaining an air gap. Accordingly, the rotor shaft 13 may be rotated together with the rotor.

Even though it has been described that all components constituting the embodiments of the present disclosure are combined into one or operated in combination with each other, the present disclosure is not necessarily limited to the embodiments. That is, within the scope of the objective of the present disclosure, all of the components may be selectively combined into at least one and operated. In addition, the terms such as "include", "consist of", or "have" described above mean that the corresponding component may be present unless otherwise stated, and thus should be construed that the terms do not exclude other components, but may further include other components. All terms, including technical or scientific terms, have the same meaning as commonly understood by those skilled in the art to which the present disclosure belongs, unless defined otherwise. Generally used terms, such as terms defined in the dictionary, should be interpreted as being consistent with the contextual meaning of the related art, and should not be interpreted in an ideal or excessively formal meaning unless explicitly defined in the present disclosure.

The above description is merely illustrative of the technical idea of the present disclosure, and those skilled in the art to which the present disclosure belongs may perform various modification and changes within the scope not departing from the essential characteristics of the present disclosure. Accordingly, the embodiments disclosed in the present disclosure are not intended to limit, but to explain the technical idea of the present disclosure, and the scope of the present disclosure is not limited by these embodiments. The scope of protection of the present disclosure should be interpreted by the claims below.

Meanwhile, the longitudinal support bar 40 is not necessarily used. For example, when the above housing 10 and rotor shaft 13 are fixed to a transport vehicle by a separate configuration, relative movement between the housing 10 and rotor shaft 13 may not occur, so the above longitudinal support bar 40 may not be used.

In addition, in the support block 20, both the seating surface 22 and the support surface 24 are not machined, but when the support block 20 is seated on the inclined part 16 of the support piece 14 and the dimensions are adjusted through machining, the precision of the air gap may be maintained to some extent by machining only the support surface 24 of the support block 20.

In the illustrated embodiment, two locking nuts 43 are used in pairs, and at least two or more locking nuts 43 may be used in pairs.

## Claims

1. A rotor support device for a shaft generator that supports a rotor shaft (13) protruding outward from both ends of a housing (10) of the shaft generator, comprising:
a support piece (14) provided in the housing (10),
a support block (20) positioned on the support piece (14), and having a support surface (24) formed by machining to support the rotor shaft (13);
a binder (30) that is in close contact with the outer surface of the rotor shaft (13) on the side opposite to the surface supported by the support block (20) and both ends thereof are fastened to the support piece (14), and
an inclined part (16) on which the support block (20) is seated,
wherein, the binder (30) includes:
a strap (32) surrounding the opposite surface of the rotor shaft (13) supported by the support block (20);
fastening pieces (34) provided on both sides of the strap (32) and installed to face the inclined part (16); and
a bolt (38) penetrating the fastening piece (34) to be fastened to the inclined part (16) and a fastening nut (38'), and
wherein a tension of the strap (32) is adjusted according to the degree to which the fastening nuts (38') are tightened to the bolt (38).

2. The rotor support device of claim 1, wherein the inclined part (16) surrounds a shaft through hole (12) through which the rotor shaft (13) penetrates.

3. The rotor support device of claim 2, wherein the inclined part (16) has a 'V' shape,
wherein a curved piece (18) having a radius of curvature corresponding to a radius of curvature of the rotor shaft (13) is provided on an upper surface of the inclined part (16), and the curved piece (18) and the surface of the inclined part (16) adjacent to the curved piece (18) have machine-designed dimensions.

4. The rotor support device of claim 3, wherein a reinforcing bar (17) is orthogonally connected to the lower surface of the inclined part (16).

5. The rotor support device of claim 3,
wherein the support block (20) includes a seating surface (22) having a radius of curvature corresponding to a radius of curvature of the curved piece (18) to be seated on the curved piece (18), and
wherein the support surface (24) is machined to have a radius of curvature corresponding to a radius of curvature of the rotor shaft (13), and is provided on the opposite side of the seating surface (22).

6. The rotor support device of claim 5, wherein the support block (20) is made of MC nylon material.

7. The rotor support device of claim 1, wherein reinforcing pieces (36) are provided at both ends of the fastening piece (34) in the width direction in order to reinforce the fastening force between the fastening piece (34) and the strap (32).

8. The rotor support device of any one of claims 1 to 7, further comprising:
a bar fastener (19) provided on a surface of the housing (10),
a flange (13') provided on the rotor shaft (13), and
a longitudinal support bar (40) for fastening between the bar fastener (19) and the flange (13'), the longitudinal support bar (40) is provided in the longitudinal direction.

9. The rotor support device of claim 8, wherein the longitudinal support bar (40) comprises:
a bar body (41);
a first screw part (41') provided at one end of the bar body (41) and fastened to the flange (13') by forming a screw portion on an outer surface thereof; and
a second screw part (41") provided at the other end of the bar body (41) and fastened to the bar fastener (19) by forming a screw portion on an outer surface thereof.

10. The rotor support device of claim 9, wherein in the first screw part (41'), at least two or more locking nuts (43) are installed at positions corresponding to both surfaces of the flange (13'), and in the second screw part (41") at least two or more locking nuts (43) are installed adjacent to the bar fastener (19).

## Patentansprüche

1. Eine Rotorabstützvorrichtung für einen Wellengenerator, welcher eine Rotorwelle (13), die von beiden Enden eines Gehäuses (10) des Wellengenerators aus nach außen ragt, abstützt, aufweisend:
ein im Gehäuse (10) vorgesehenes Stützteil (14),
einen an dem Stützteil (14) angeordneten Stützblock (20) mit einer durch Bearbeitung ausgebildeten Stützfläche (24) zum Abstützen der Rotorwelle (13),
einen Verbinder (30), welcher in engem Kontakt mit der Außenfläche der Rotorwelle (13) auf der Seite, welche entgegengesetzt zu der durch den Stützblock (20) abgestützten Fläche ist, steht und dessen beide Enden am Stützteil (14) befestigt sind, und
einen schrägen Teil (16), auf welchem der Stützblock (20) sitzt,
wobei der Verbinder (30) aufweist:
einen Streifen (32), welcher die entgegengesetzte Fläche der durch den Stützblock (20) abgestützten Rotorwelle (13) umgibt,
Befestigungsteile (34), welche an beiden Seiten des Streifens (32) vorgesehen sind und so installiert sind, dass sie dem schrägen Teil (16) gegenüberliegen, und
einen Bolzen (38), welcher den Befestigungsteil (34) durchdringt, um an dem schrägen Teil (16) und einer Befestigungsmutter (38') befestigt zu werden, und
wobei die Spannung des Streifens (32) entsprechend gemäß Grad, mit welchem die Befestigungsmuttern (38') an den Bolzen (38) angezogen werden, eingestellt wird.

2. Die Rotorabstützvorrichtung nach Anspruch 1, wobei der schräge Teil (16) ein Wellendurchgangsloch (12) umgibt, durch welches die Rotorwelle (13) hindurchdringt.

3. Die Rotorabstützvorrichtung nach Anspruch 2, wobei der schräge Teil (16) eine V-Form aufweist,
wobei an einer oberen Fläche des schrägen Teils (16) ein gekrümmtes Teil (18) mit einem Krümmungsradius, welcher einem Krümmungsradius der Rotorwelle (13) entspricht, vorgesehen ist und das gekrümmte Teil (18) sowie die an das gekrümmte Teil (18) angrenzende Fläche des schrägen Teils (16) maschinell gefertigte Abmessungen aufweisen.

4. Die Rotorabstützvorrichtung nach Anspruch 3, wobei eine Verstärkungsstange (17) orthogonal mit der unteren Fläche des schrägen Teils (16) verbunden ist.

5. Die Rotorabstützvorrichtung nach Anspruch 3,
wobei der Stützblock (20) eine Auflagefläche (22) mit einem Krümmungsradius, welcher dem Krümmungsradius des gekrümmten Teil (18) entspricht, zur Auflage auf dem gekrümmten Teil (18) aufweist, und
wobei die Stützfläche (24) so bearbeitet ist, dass sie einen Krümmungsradius, welcher einem Krümmungsradius der Rotorwelle (13) entspricht, aufweist und auf der der Auflagefläche (22) entgegengesetzten Seite vorgesehen ist.

6. Die Rotorabstützvorrichtung nach Anspruch 5, wobei der Stützblock (20) aus MC-Nylonmaterial ausgebildet ist.

7. Die Rotorabstützvorrichtung nach Anspruch 1, wobei Verstärkungsteile (36) an beiden Enden des Befestigungsteils (34) der in Breitenrichtung vorgesehen sind, um die Befestigungskraft zwischen dem Befestigungsteil (34) und dem Streifen (32) zu verstärken.

8. Die Rotorabstützvorrichtung nach einem der Ansprüche 1 bis 7, ferner aufweisend:
ein an einer Fläche des Gehäuses (10) vorgesehenes Stangenbefestigungselement (19),
einen an der Rotorwelle (13) vorgesehenen Flansch (13'), und
eine Längsstützstange (40) zur Befestigung zwischen dem Stangenbefestigungselement (19) und dem Flansch (13'), wobei die Längsstützstange (40) in der Längsrichtung vorgesehen ist.

9. Die Rotorabstützvorrichtung nach Anspruch 8, wobei die Längsstützstange (40) aufweist:
einen Stangenkörper (41);
einen ersten Schraubenteil (41'), welcher an einem Ende des Stangenkörpers (41) vorgesehen ist und durch Ausbilden eines Schraubenabschnitts an seiner Außenfläche an dem Flansch (13') befestigt ist; und
einen zweiten Schraubenteil (41"), welcher am anderen Ende des Stangenkörper (41) vorgesehen ist und durch Ausbilden eines Schraubenabschnitts an seiner Außenfläche an dem Stangenbefestigungselement (19) befestigt ist.

10. Die Rotorabstützvorrichtung nach Anspruch 9, wobei im ersten Schraubenteil (41') mindestens zwei oder mehr Sicherungsmuttern (43) an Positionen, welche mit beiden Flächen des Flansches (13') korrespondieren, installiert sind und im zweiten Schraubenteil (41") mindestens zwei oder mehr Sicherungsmuttern (43) benachbart zum Stangenbefestigungselement (19) installiert sind.

## Revendications

1. Dispositif de support de rotor pour générateur d'arbre qui supporte un arbre de rotor (13) faisant saillie vers l'extérieur à partir des deux extrémités d'un carter (10) du générateur d'arbre, comprenant :
une pièce de support (14) située dans le carter (10),
un bloc de support (20) disposé sur la pièce de support (14), et présentant une surface de support (24) formée par usinage pour supporter l'arbre de rotor (13) ;
un liant (30) qui est en contact étroit avec la surface extérieure de l'arbre de rotor (13) sur le côté opposé à la surface supportée par le bloc de support (20) et ses deux extrémités sont fixées à la pièce de support (14), et
une partie inclinée (16) sur laquelle repose le bloc de soutien (20),
le liant (30) comprenant :
une sangle (32) entourant la surface opposée de l'arbre de rotor (13) supporté par le bloc de support (20) ;
des pièces de fixation (34) situées des deux côtés de la sangle (32) et installées pour faire face à la partie inclinée (16) ; et
un boulon (38) pénétrant dans la pièce de fixation (34) à fixer sur la partie inclinée (16) et un écrou de fixation (38'), et
une tension de la sangle (32) étant ajustée en fonction du degré auquel les écrous de fixation (38') sont serrés sur le boulon (38).

2. Dispositif de support de rotor selon la revendication 1, la partie inclinée (16) entourant un trou traversant d'arbre (12) à travers lequel pénètre l'arbre de rotor (13).

3. Dispositif de support de rotor selon la revendication 2, la partie inclinée (16) présentant une forme en « V »,
une pièce incurvée (18) ayant un rayon de courbure correspondant à un rayon de courbure de l'arbre de rotor (13) étant située sur une surface supérieure de la partie inclinée (16), et la pièce incurvée (18) et la surface de la partie inclinée (16) adjacente à la pièce incurvée (18) ayant des dimensions conçues par machine.

4. Dispositif de support de rotor selon la revendication 3, une barre de renforcement (17) étant reliée orthogonalement à la surface inférieure de la partie inclinée (16).

5. Dispositif de support de rotor selon la revendication 3,
le bloc de support (20) comprenant une surface d'appui (22) ayant un rayon de courbure correspondant à un rayon de courbure de la pièce incurvée (18) devant reposer sur la pièce incurvée (18), et
la surface de support (24) étant usinée pour avoir un rayon de courbure correspondant à un rayon de courbure de l'arbre de rotor (13), et étant disposée sur le côté opposé de la surface d'appui (22).

6. Dispositif de support de rotor selon la revendication 5, le bloc de support (20) étant constitué d'un matériau en nylon MC.

7. Dispositif de support de rotor selon la revendication 1, des pièces de renforcement (36) étant situées aux deux extrémités de la pièce de fixation (34) dans le sens de la largeur afin de renforcer la force de fixation entre la pièce de fixation (34) et la sangle (32) .

8. Dispositif de support de rotor selon l'une quelconque des revendications 1 à 7, comprenant en outre :
un élément de fixation de barre (19) situé sur une surface du carter (10),
une bride (13') située sur l'arbre de rotor (13), et
une barre de support longitudinale (40) à fixer entre l'élément de fixation de barre (19) et la bride (13'), la barre de support longitudinale (40) étant disposée dans la direction longitudinale.

9. Dispositif de support de rotor selon la revendication 8, la barre de support longitudinale (40) comprenant :
un corps de barre (41) ;
une première partie vis (41') située à une extrémité du corps de barre (41) et fixée à la bride (13') en formant une partie vis sur une surface extérieure de celle-ci ; et
une seconde partie vis (41'') située à l'autre extrémité du corps de barre (41) et fixée à l'élément de fixation de barre (19) en formant une partie vis sur une surface extérieure de celui-ci.

10. Dispositif de support de rotor selon la revendication 9, dans la première partie vis (41'), au moins deux écrous de blocage (43) ou plus étant installés à des positions correspondant aux deux surfaces de la bride (13'), et dans la seconde partie vis (41") au moins deux écrous de blocage (43) ou plus étant installés adjacents à l'élément de fixation de barre (19).
